# DEMANDE DE BREVET EUROPEEN

(11) **EP 1 058 418 A1**
(43) Date de publication de la demande: **06.12.2000**
(21) Numéro de dépôt: 00401347.0
(22) Date de dépôt: 17.05.2000
(51) Int. Cl.: H04L 12/24

(54) **Procédé de génération d'un module d'une base d'informations d'administration**

(30) Priorité: 21.05.1999 FR 9906521
(71) Demandeur: BULL S.A., 78434 Louveciennes Cedex (FR)
(72) Inventeur: Plutino, Antonio, 75006 Paris (FR); Tesseron, Jean-Luc, 78370 Plaisir (FR)
(74) Mandataire: Denis, Hervé

(57) **Abrégé**

Le procédé de génération automatique d'un module (19) d'une base d'informations d'administration (MIB) d'une ressource informatique (11) représentée par objets et incluant une architecture d'objets distribués (CORBA) selon un langage donné (IDL), consiste à former un fichier (100) d'un fichier de description (101) et d'un fichier (102) de clauses de génération automatique, une clause comprenant au moins un mot clé déterminant un mode de génération et au moins une caractéristique sur laquelle porte un mot clé, et à appliquer le fichier (100) à des moyens de génération (52, 54) pour obtenir le module.

## Description

### Domaine technique.

L'invention concerne l'administration d'au moins une ressource informatique représentée dans une technologie orientée objets. La ressource informatique peut être un système informatique et/ou un réseau informatique et/ou une application informatique. L'invention a pour objet un procédé de génération automatique d'un module d'une base d'informations d'administration d'un tel système. La génération d'un tel module impliquant la modification des agents d'administration utilisant ladite base et d'un intégrateur de ces agents, l'invention s'applique aussi à la génération automatique d'un tel intégrateur d'agents d'administration.

L'invention est plus particulièrement adaptée à un système informatique incluant une architecture d'objets distribués, telle que l'architecture CORBA (Common Object Request Broker Architecture) définie par le groupement de fournisseurs et d'utilisateurs travaillant à la normalisation de la gestion des objets et connu sous le nom OMG (Object Management Group) et l'architecture OLE/COM (Object Linking and Embedding / Component Object Modeler) de Microsoft. L'architecture CORBA sera prise comme exemple non limitatif dans la suite du texte. Dans le domaine de l'informatique distribuée, l'architecture CORBA permet de décrire des interfaces de services informatiques indépendamment des fournisseurs et des langages mettant en oeuvre ces services. La description des interfaces est faite à l'aide d'un langage neutre de description d'interface connu sous le nom de langage IDL (Interface Definition Language) défini aussi par le groupement OMG. Ce langage définit les frontières d'un composant que constitue un objet géré, c'est-à-dire les interfaces contractuelles du composant avec des clients potentiels.

L'invention a aussi pour objets corollaires le système d'administration et le système informatique qui mettent en oeuvre le procédé.

### L'art antérieur.

L'administration de ressources informatiques est ordinairement faite par une plate-forme logicielle d'administration dont on connaît plusieurs types. La plate-forme qui servira d'exemple par la suite est celle connue sous le nom de marque déposée OpenMaster, commercialisée par le demandeur. Cette plate-forme se fonde sur une technologie à objets. Selon cette technologie, les moyens constituant la ressource informatique sont convertis en classes d'objets organisées hiérarchiquement dans une base d'informations d'administration MIB (Management Information Base). L'invention s'applique à la génération d'une partie, nommée module, de cette base.

D'autre part, la plate-forme servant d'exemple utilise le protocole normalisé de communication dédié à l'administration connu sous le nom de protocole CMIP (Common Management Information Protocol). Le protocole CMIP repose sur la norme ISO définissant les services pour le transfert des informations d'administration appelés services CMIS (Common Management Information Services). Ce protocole est organisé selon un langage de description des informations d'administration appelé langage GDMO/ASN. 1 issu de directives pour la définition d'objets gérés (Guidelines for the Definition of Managed Objects) selon le modèle d'interconnexion connu sous le nom de marque déposée OSI (Open Systems Interconnection) de l'organisme international de normalisation ISO (International Standards Organisation), et de syntaxe ASN 1 (Application Syntax Notation One). Pour des raisons de commodité, ce langage sera appelé simplement GDMO.

Un problème se pose quand l'administration de ressources informatiques au moyen de cette plate-forme utilise une architecture d'objets distribués telle que CORBA. Cette administration concerne non seulement l'architecture CORBA elle-même, mais aussi les services d'applications coopérant avec cette architecture. Ces services peuvent être administrés par l'intermédiaire d'une interface d'administration publiée, décrite dans le langage IDL de l'architecture CORBA. À partir d'une description en langage IDL d'une interface d'un service CORBA, un compilateur IDL génère dans un langage de programmation, par exemple C++, du code dont une partie, connue sous le nom normalisé "skeleton", permet de mettre en oeuvre le service et dont une autre partie, connue sous le nom normalisé "stub", permet d'appeler le service à partir d'un autre programme sous forme de bibliothèque. L'agent mis en oeuvre comme service particulier de CORBA a donc une interface décrite en langage IDL. Cette description est aussi la description de l'information d'administration offerte par l'agent. Le langage IDL sert ainsi à la fois de langage de description d'interface et de langage de description d'information d'administration.

Le procédé de génération automatique d'un module d'une base d'informations d'administration d'une ressource informatique représentée par objets et incluant une architecture d'objets distribués CORBA selon le langage IDL, consiste actuellement à faire un fichier de description d'interface dans le langage IDL, à faire une conversion automatique du fichier et à compiler le fichier de description pour obtenir le module.

Plusieurs algorithmes de conversion sont connus, tels que ceux publiés par le groupe JIDM (Joint Iinter-Domain Management) du groupe ORG. Cependant, ces algorithmes ne suffisent actuellement pas pour obtenir une version complète et exploitable en langage GDMO d'un module de la base MIB. Le problème est que des notions conceptuelles pouvant être décrites en langage GDMO ne peuvent pas l'être en langage IDL. Par conséquent, on n'obtient qu'une partie seulement du module désiré de la base MIB.

La solution actuelle consiste à compléter manuellement le code généré par la conversion, de façon à utiliser au mieux les caractéristiques du langage GDMO. Cette solution a donc comme premier inconvénient d'être coûteuse en temps et en argent. De plus, ce travail manuel doit être reproduit après chaque traduction dans le cas de changements du contenu du fichier de description rendu disponible par un agent CORBA. C'est donc une solution ponctuelle, qui doit être revue et complétée pour être adaptée à chaque cas et qui a pour second inconvénient d'être limitée au cas d'espèce et d'être d'autant plus coûteuse qu'il y a de changements de la description. Or, l'évolution de cette technologie est rapide et s'avère donc très coûteuse. Le troisième inconvénient est dû au fait que le fichier de description en langage IDL est traité par un compilateur, qui oblige la modification de la syntaxe du langage IDL. La syntaxe est ainsi altérée dans le seul but de la faire passer dans un générateur extérieur à l'architecture CORBA.

La génération d'un module de base MIB implique directement la modification des agents d'administration qui servent de liens entre l'architecture CORBA et la plate-forme d'administration, ainsi que le composant servant d'interface entre ces agents et la plate-forme et appelé intégrateur d'agents. Le même fichier de description IDL est utilisé pour modifier les agents et l'intégrateur de ces agents. Alors que la modification des agents ne pose pas de problème, la modification de l'intégrateur d'agents CORBA pose le même problème que celui exposé précédemment.

### Sommaire de l'invention.

Un premier but de l'invention est de générer automatiquement dans une base d'informations d'administration MIB un module plus complet que celui fourni par la conversion automatique actuellement disponible, le module désiré étant suffisamment complet pour être exploitable pour l'administration. Le module généré peut être nouveau ou résulter d'une modification d'un module antérieur.

Un second but est de générer un module de base MIB exploitable sans altérer le fichier de description IDL.

Un troisième but est de générer un module de base MIB exploitable et facilement adaptable aux changements de la description initiale.

Un quatrième but est de générer simplement et à moindre coût un module de base MIB exploitable.

Un cinquième but de l'invention est, comme conséquence de la génération du module d'administration, de modifier automatiquement l'intégrateur d'agents d'administration sans intervention manuelle.

L'invention a pour objet un procédé de génération automatique d'un module d'une base d'informations d'administration (MIB) d'une ressource informatique représentée par objets et incluant une architecture d'objets distribués (CORBA) selon un langage donné (IDL), consistant à faire un fichier de description d'interface dans le langage donné et à appliquer ledit fichier à des moyens de génération automatique pour obtenir une partie dudit module, caractérisé en ce qu'il consiste à ajouter audit fichier de description un fichier de clauses de génération automatique, une clause comprenant au moins un mot clé déterminant un mode de génération et au moins une caractéristique sur laquelle porte un mot clé, et à appliquer le fichier de clauses auxdits moyens de génération pour compléter ledit module.

Accessoirement, le fichier de clauses et le fichier de description ne forment qu'un seul fichier, l'un des deux fichiers étant distingué de l'autre par une marque.

De même, les moyens de génération comprennent en outre un générateur (54) pour la génération automatique d'une partie d'un intégrateur d'agents d'administration.

L'invention a aussi pour objet un ystème d'administration d'une ressource informatique représentée par objets définis dans une base d'informations d'administration (MIB) incluant un module, la ressource informatique incluant une architecture d'objets distribués (CORBA) selon un langage donné (IDL), caractérisé en ce qu'il met en oeuvre ledit procédé.

### Présentation des dessins.

- La figure 1 est une vue synoptique d'un système d'administration d'un système informatique, le système d'administration mettant en oeuvre un procédé de génération automatique d'un module d'une base MIB et du procédé en résultant pour la génération automatique d'un intégrateur d'agents d'administration.
- La figure 2 est une vue synoptique détaillée de la structure d'une plate-forme d'administration du système d'administration représenté sur la figure 1.
- La figure 3 est une vue schématique d'un arbre représentatif d'un exemple de base MIB correspondant au système informatique représenté sur la figure 1 et incorporant le module à générer conformément à l'invention.
- La figure 4 est une vue schématique d'une architecture d'objets distribués CORBA en liaison avec un intégrateur d'agents CORBA de la plate-forme représentée sur la figure 2.
- Et la figure 5 est un organigramme illustrant schématiquement le procédé de génération automatique d'un module de base MIB, ce procédé étant aussi utilisé pour la génération automatique de l'intégrateur d'agents CORBA représenté sur la figure 4.

### Description détaillée d'exemples illustrant l'invention.

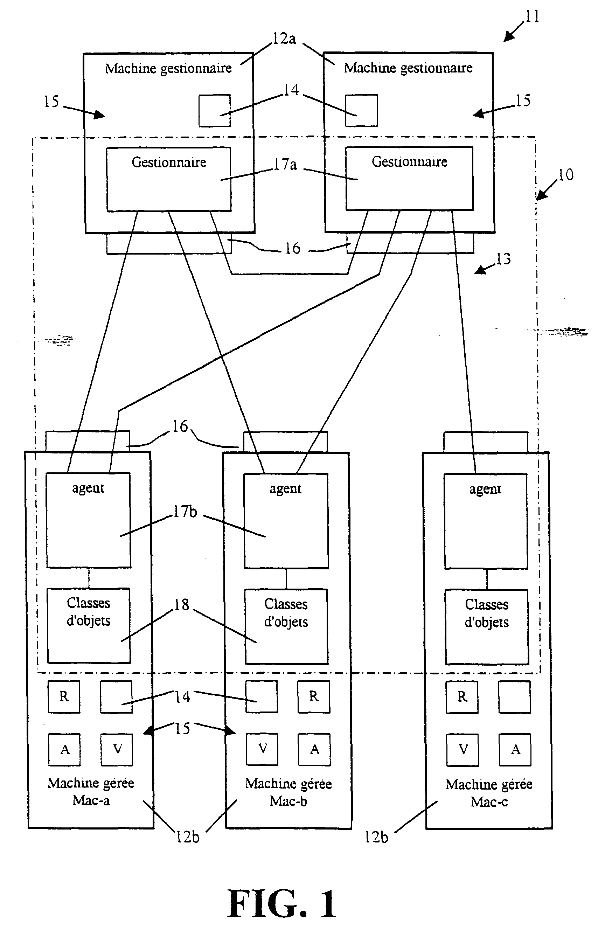

La figure 1 représente un système d'administration 10 d'un système informatique 11. L'exemple qui suit se rapporte au système d'administration et de sécurité connu sous le nom de marque déposée OpenMaster du demandeur. Sa conception est conforme aux normes ISO de l'administration de systèmes et réseaux. Dans ces conditions, les termes utilisés seront conformes à cette norme, qui sont de langue anglaise, notamment les sigles et acronymes. D'autre part, les verbes "administrer" et "gérer" et leurs dérivés qui seront employés ici traduisent tous deux indifféremment le verbe anglais "manage" et ses dérivés. L'homme du métier connaît bien ces normes. Compte tenu de leur masse informative, on ne donnera ici que les éléments nécessaires à la compréhension de l'invention.

Le système informatique illustré 11 est distribué et composé de machines 12 (12a, 12b) organisées en un ou plusieurs réseaux 13. Une machine est une unité conceptuelle très large, de nature matérielle et logicielle, pouvant être les moyens impliqués pour exécuter une application donnée, des moyens pour exécuter une fonction donnée, un ordinateur, ainsi qu'un système informatique dans une architecture à systèmes en cascade. Les machines 12 peuvent être donc très diverses, telles que stations de travail, serveurs, routeurs, machines spécialisées et passerelles entre réseaux. Le système informatique 11 est ordinairement un système comprenant plusieurs processeurs 14, un processeur 14 étant par exemple illustré dans chaque machine 12, des moyens de mémoire 15 pour contenir les logiciels et les données du système, et des moyens d'entrée-sortie 16 servant pour la communication entre machines par l'intermédiaire du réseau 13 à l'aide de protocoles divers, ainsi que pour une ou plusieurs communications extérieures, par exemple pour l'impression, la télécopie, etc. Un tel système peut par exemple gérer des données à distance, distribuer des données dans le cas d'un système de réservation, commander l'exécution de programmes a distance sur des machines spécialisées, partager localement des ressources physiques ou logicielles, et communiquer.

Le système d'administration 10 a une architecture de type client-serveur. Dans l'exemple illustré, les unités formant clients et serveurs dans le système d'administration 10 comprennent deux gestionnaires 17a formant serveurs et trois agents 17b formant clients. Une machine 12 inclaunt un gestionnaire est dite machine gestionnaire ou serveur 12a et une machine incluant un agent est dite machine gérée 12b ou cliente. Les gestionnaires 17a et les agents 17b sont reliés entre eux par l'intermédiaire du réseau 13. Dans l'exemple illustré, les deux gestionnaires sont reliés entre eux, l'un des gestionnaires 17a étant relié à deux des agents 17b tandis que l'autre est relié aux trois agents. Les liaisons entre gestionnaires et agents peuvent être très diverses. D'autre part, les communications entre gestionnaires et agents peuvent se faire selon un ou plusieurs protocoles, de préférence normalisés tels que les protocoles CMIP (déjà cité) et SNMP (System Network Management Protocol). Le protocole CMIP repose sur la norme ISO définissant les services pour le transfert des informations d'administration appelés services CMIS (Common Management Information Services). Chaque protocole est organisé selon un langage de description des informations d'administration. Par exemple, le protocole SNMP utilise le langage SMI (Structure of Management Information) tandis que le protocole CMIP utilise le langage GDMO/ASN. 1 déjà cité, et simplement appelé GDMO.

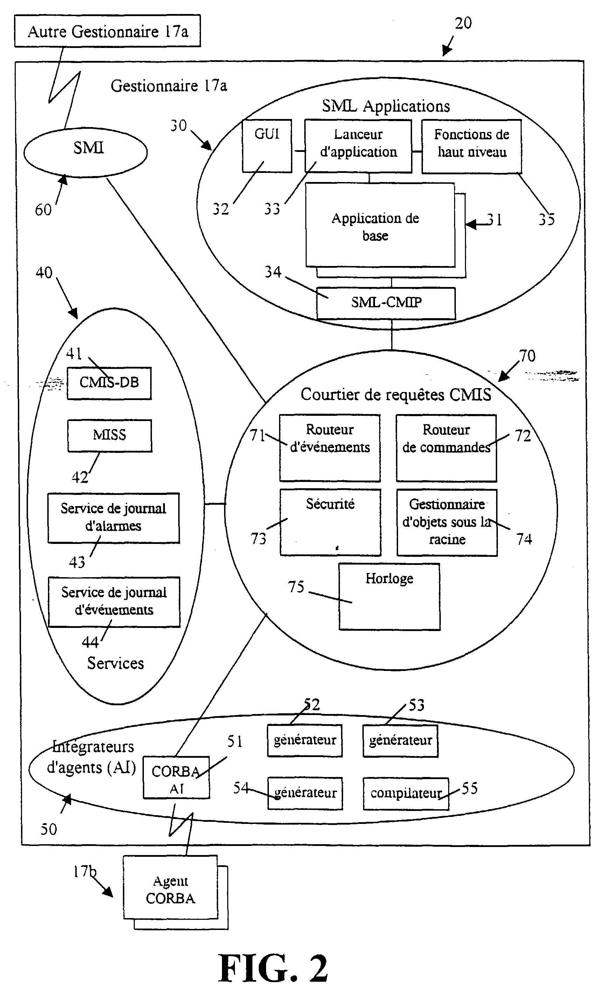

La figure 2 illustre la structure d'une plate-forme d'administration 20 du système d'administration 10. La plate-forme 20 peut être limitée à une machine gestionnaire 12a, ou être distribuée parmi plusieurs machines gestionnaires. Pour des raisons de commodité, la plate-forme illustrée dans la figure 2 sera limitée à une machine gestionnaire 12a et correspond ainsi au gestionnaire 17a. La plate-forme illustrée 20 se compose de cinq blocs fonctionnels : un bloc 30 d'applications en langage SML (Systems Management Language), un bloc 40 de services, un bloc 50 d'intégrateurs d'agents, un bloc 60 d'interface de gestionnaire, et un bloc de communication 70.

Le bloc 30 d'applications inclut un ensemble d'applications de base 31 (core applications), une interface graphique d'utilisateur 32 appelée interface GUI (Graphic User Interface), un tableau de bord constituant un lanceur d'applications 33, une interface 34 de communication extérieure du bloc 30, et un ensemble 35 de fonctions de haut niveau. Dans l'exemple choisi, les applications 31 sont écrites dans le langage SML et communiquent avec le bloc 70, utilisant le protocole CMIP et le langage GDMO, par l'interface 34 qui est donc ici une interface SML/GDMO. L'interface GUI 32 permet à un utilisateur de se connecter à la machine 12a pour démarrer et arrêter comme il le désire ses propres copies des applications de base 31. Le lanceur d'applications 33 présente un tableau représentant les applications 31 sous forme générale par leur nom et/ou, comme dans l'exemple choisi, sous forme d'icônes. Il suffit de cliquer sur l'icône choisie pour lancer l'application correspondante. Les fonctions de haut niveau 35 sont ajoutées pour offrir des fonctions particulières et des interfaces graphiques correspondantes.

Le bloc 40 comprend plusieurs services, notamment un service 41 de base de données CMIS, appelé service CMIS-DB, un service 42 de schémas d'informations d'administration ou service MISS (Management Information Schema Service), un service 43 de journal d'alarmes et un service 44 de journal d'événements normalement connecté à un journal d'événements non illustré. Le bloc 50 illustré contient seulement un intégrateur 51 d'agents d'administration, appelé ordinairement par le sigle AI (Agent Integrator) et affecté à un protocole particulier, ici le protocole CORBA, d'autres intégrateurs d'agents pouvant exister pour le protocole SNMP, etc. le protocole CMIP est utilisé comme exemple dans la plate-forme 20. L'intégrateur 51. d'agents est connecté au bloc 70 et à un ou plusieurs agents 17b fonctionnant sous le protocole correspondant, ici CORBA. Dans l'exemple illustré, le bloc 50 inclut aussi des moyens de génération 52, 53 et 54 et des moyens de compilation 55 qui, d'une manière générale, pourraient être contenus dans une partie quelconque de la plate-forme 20. Le bloc d'interface 60 permet à la plate-forme 20 de communiquer avec un autre gestionnaire 17a du système 10, pouvant être un supragestionnaire de niveau hiérarchique supérieur. Enfin, le bloc de communication 70 constitue un lien entre les autres blocs et est appelé courtier de requêtes CMIS ou distributeur CMIS (CMIS Dispatcher). Il contient un routeur 71 d'événements, permettant aux composants d'administration de souscrire à des notifications d'événement, un routeur 72 de commandes pour transmettre des requêtes au composant destinataire et éviter aux applications de savoir quel composant "possède" chaque instance MOI, une infrastructure de sécurité 73, un gestionnaire 74 d'objets sous la racine ROOT (ROOT Object Manager), et une horloge 75 (timer).

Selon une option courante et avantageuse du système d'administration 10, un gestionnaire 17a gère aussi la machine gestionnaire 12a correspondante ou gère tout ou partie des machines gestionnaires. Cela peut se faire de façon similaire à celle illustrée précédemment, plus ou moins adaptée à cette option. L'exemple illustré offre le double avantage de faciliter la lecture des dessins tout en permettant à l'homme du métier de faire une généralisation du système décrit et illustré.

Le système informatique 11 de la figure 1 se compose de moyens matériels ou logiciels, réels ou virtuels, tels que machines, imprimantes, circuits virtuels et applications. Le système d'administration 10 utilise ces moyens selon un modèle de données orienté objets, dont on connaît les principales caractéristiques : classes, objets, héritage, encapsulation, méthodes (ici actions) et événements. L'organisation des classes dans l'exemple choisi du système 10 est hiérarchique. On distingue l'arbre des classes, une classe étant définie en subordination à une ou plusieurs classes mères ; et l'arbre des instances, une instance étant attachée à une ou plusieurs instances mères. En particulier, une classe est définie par des caractéristiques nommées attributs, tels qu'un nom d'un composant du système et un état d'impression. Un objet d'une classe sera appelé une instance de la classe. Dans l'exemple choisi, les moyens du système informatique 11 sont donc convertis en classes d'objets organisées hiérarchiquement dans une base d'informations d'administration MIB (Management Information Base). Cette base n'est pas une base de données proprement dite, mais est assimilable à un catalogue de caractéristiques puisqu'elle contient la description et le contenu de toutes les classes gérées par le système d'administration 10. Dans la base MIB, les objets sont divisés en classes d'objets gérés, dites classes MOC (Managed Object Class). Un objet géré est une vue abstraite, définie pour les besoins de la gestion, d'une ressource logique ou physique d'un système. Chaque classe MOC représente un type donné desdits moyens du système 11. À chaque classe MOC peuvent être attachées une ou plusieurs instances d'objets gérés, appelées instances MOI (Managed Object Instance) et représentant des occurrences actuelles desdits moyens.

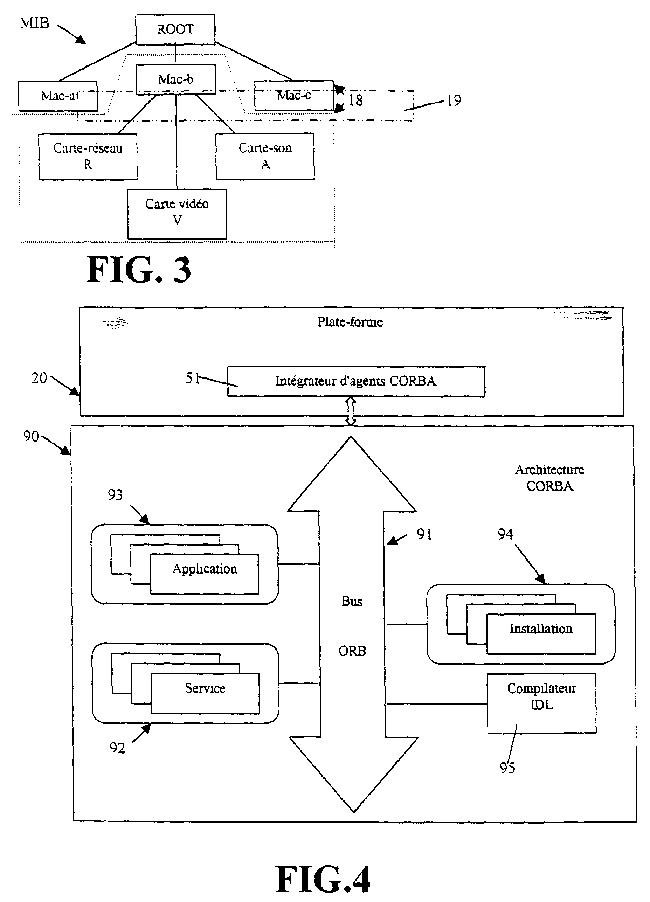

La figure 3 illustre un exemple de structure d'une base MIB. Elle a une structure arborescente, faite d'une racine ROOT à laquelle sont attachés des sous-arbres ou sous-MIB 18, ici représentatifs des trois machines gérées 12b appelées Mac-a, Mac-b et Mac-c. Les sous-arbres 18 sont aussi représentés sous forme synoptique dans la figure 1, en liaison avec les agents 17b respectifs. La racine ROOT est contenue dans le gestionnaire 74 et les racines des sous-arbres seront appelées sous-racines correspondant au terme anglais Rootlet. Ainsi, toute application 31 devant traiter un objet de la base MIB s'adresse au gestionnaire 74 pour accéder à l'objet. Dans l'exemple illustré, on a supposé que chaque machine 12b a, comme représenté sur la figure 1, trois cartes 19, à savoir une carte-réseau R, une carte vidéo V et une carte-son A, de sorte que chaque sous-arbre 18 correspondant contient les trois objets correspondants. Dans la figure 3, seul le sous-arbre 18 relatif à la machine Mac-b a été développé. On y voit que le sous-arbre 18 a la sous-racine Mac-b incluant trois fils constitués par les trois objets respectifs carte-réseau, carte vidéo et carte-son (R, V et A). L'invention s'applique à la génération automatique d'une partie de l'arbre, appelée module d'informations d'administration 19 et faite d'au moins un objet géré MOC et dont la description en langage IDL est issue d'un agent CORBA 51. Le module est défini de façon abstraite par un trait fantôme dans la figure 3. L'invention a pour objet un procédé de génération automatique d'un module 19 à partir d'un fichier de description en langage IDL, ce procédé étant mis en oeuvre dans un intégrateur d'agent 51.

Une instance dans la base MIB a un nom distinctif relatif RDN (Relative Distinguished Name) sous forme d'une liste d'assertions sur valeur d'attribut appelées assertions AVA (Attribute Value Assertion). Chaque assertion AVA est un couple 〈attribut de nommage〉 〈valeur〉, l'attribut de nommage étant celui qui, dans la classe, permet l'identification unique d'une instance par rapport à son instance mère. Dans un gestionnaire 17a de l'exemple illustré, un nom RDN est composé d'une seule assertion AVA, donc d'un seul couple 〈attribut de nommage〉 〈valeur〉. D'une manière générale, il est cependant possible qu'un nom distinctif RDN ait plusieurs assertions AVA. Chaque instance dans la base MIB est identifiée de façon unique par son nom distinctif DN (Distinguished Name), qui est la suite des noms RDN sur le chemin entre la racine et l'instance dans l'arbre des instances. Un sous-arbre d'une instance correspond à l'ensemble formé par l'instance elle-même et les instances qui lui sont subordonnées dans l'arbre des instances.

Sous la racine ROOT de la base MIB est attachée une sous-racine pour chaque service du bloc 40. Dans ce bloc, le service CMIS-DB 41 fournit une base de données des objets gérés MOI destinée à leur persistance une fois que le gestionnaire a été mis hors fonctionnement. Il supporte toutes les classes MOC des services CMIS qui sont stockées localement dans une base de données. En outre, il fournit un ensemble de services ou fonctions de base, appelées aussi primitives, disponibles pour toutes les applications. Ces fonctions sont bien adaptées à la structure hiérarchique de la hase MIB Elles incluent notamment les fonctions : M-GET pour lire une ou plusieurs instances, M-SET pour mettre à jour une ou plusieurs instances, M-CREATE pour créer une instance, M-ACTION pour activer une opération spécifique sur une ou plusieurs instances et M-EVENT pour envoyer un événement. Ces fonctions supportent les notions de filtrage offrant la possibilité de filtrer les instances selon certains critères portant sur leurs attributs et les notions de portée (scope) permettant de préciser le niveau de profondeur dans l'arbre des instances.

Le service MISS 42 fournit les moyens d'identification des objets gérés, les moyens étant ceux définis initialement dans les documents de définitions GDMO contenus dans une description GDMO. Il permet d'exécuter des processus de description pour entrer un nouveau jeu de définitions en utilisant un compilateur GDMO et des processus de recherche (retrieval processes) pour savoir comment une information d'administration antérieurement entrée peut être lue par n'importe quel composant de la plate-forme 20. Ces deux processus partagent une base de données appelée base de schémas d'informations d'administration, souvent abrégée en base de schémas ou base MISB (Management Information Schema Base). Elle sert au stockage de tous les jeux correctement compilés des définitions d'informations d'administration. La base est modélisée par une base MIB. Cela signifie que la structure de l'information contenue dans la base de schémas est logiquement vue comme une base MIB et qu'elle utilise elle-même la notation GDMO. Cette vue logique de la base de schémas est une partie de la base MIB globale accédée par la plate-forme 20 et est appelée base MIB de schémas d'informations d'administration.

Les mécanismes et modalités d'échange entre objets peuvent être régis de diverses façons dans les machines. Parmi elle, l'exemple choisi utilise les mécanismes et modalités régis par une architecture d'objets distribués, l'architecture CORBA en l'occurrence. Dans le domaine de l'informatique distribuée, l'architecture CORBA permet de spécifier des interfaces de services informatiques indépendamment des fournisseurs et des langages mettant en oeuvre ces services. La spécification des interfaces est faite à l'aide d'un langage neutre de description d'interface connu sous le nom de langage IDL (Interface Definition Language) défini aussi par le groupement OMG. Ce langage définit les frontières d'un composant que consttue un objet géré, c'est-à-dire les interfaces contractuelles du composant avec des clients potentiels.

On a vu que l'intégrateur 51 d'agents sert d'interfaces entre la plate-forme 20 et les agents correspondants 17b de l'architecture GORBA.

La figure 4 illustre la structure d'une architecture CORBA 90 en liaison avec la plate-forme 20 par l'intermédiaire de l'intégrateur d'agent 51 de type CMIP/CORBA. L'architecture CORBA 90 comprend : un courtier 91 de requêtes d'objets ou courtier ORB (Object Request Broker) définissant un bus des objets CORBA; un ensemble 92 de services CORBA définissant les infrastructures d'objets au niveau système qui étendent le bus ; un ensemble 93 d'applications CORBA; un ensemble 94 d'installations CORBA (CORBA facilities) définissant les infrastructures horizontales et verticales qui sont utilisées directement par les objets d'affaire (business objecta) ; et un compilateur IDL 95.

Comme il a été dit en introduction, le procédé connu de génération d'un module de base MIB consiste à utiliser un fichier de description IDL tel qu'indiqué dans l'annexe 1B à la présente demande, qui fait partie de la description et à appliquer le fichier à un générateur 52 pour obtenir une partie dudit module,

Pour la réalisation du générateur 52, on connaît plusieurs algorithmes de conversion, notamment les algorithmes d'administration inter-domaine et connus sous le nom JIDM (Joint-Inter-Domain Management) issus du groupement OMG. Cependant, ils ne suffisent pas poux obtenir une version complète et exploitable en langage GDMO. Cette insuffisance est due au fait que des notions conceptuelles pouvant être décrites en langage GDMO ne peuvent pas l'être en langage IDL. Ces notions sont notamment:
- la définition des attributs de nommage,
- des règles de construction d'arbres connus sous le nom de liens de nommage et plus ordinairement *name-binding*,
- l'allocation d'identifieurs d'objets, et
- l'utilisation d'une même description d'attribut dans des interfaces différentes.

La solution à ce problème consiste à ajouter au fichier de description IDL de l'annexe 1B des commentaires pour la conversion, tels que ceux illustrés dans l'annexe 1A. Selon l'exemple de l'annexe 1, les commentaires de l'annexe 1A sont contenus dans une zone de commentaires solidaire du fichier de description IDL de l'annexe 1B, la zone de commentaires pouvant précéder ou suivre la description IDL. Dans ce cas, la zone se distingue des autres commentaires de la description IDL (annexe 1B) par une marque, en l'occurrence la marque GEN. Selon une variante possible, les commentaires de l'annexe 1A pourraient être contenus dans un fichier similaire à la zone illustrée mais indépendant du fichier de description IDL. Dans ce cas, il suffit d'appeler le fichier de commentaires pour compléter la description IDL. Ainsi, la description IDL peut toujours être passée au travers du compilateur IDL 95, avec les mêmes résultats, puisque la syntaxe du langage n'est pas modifiée.

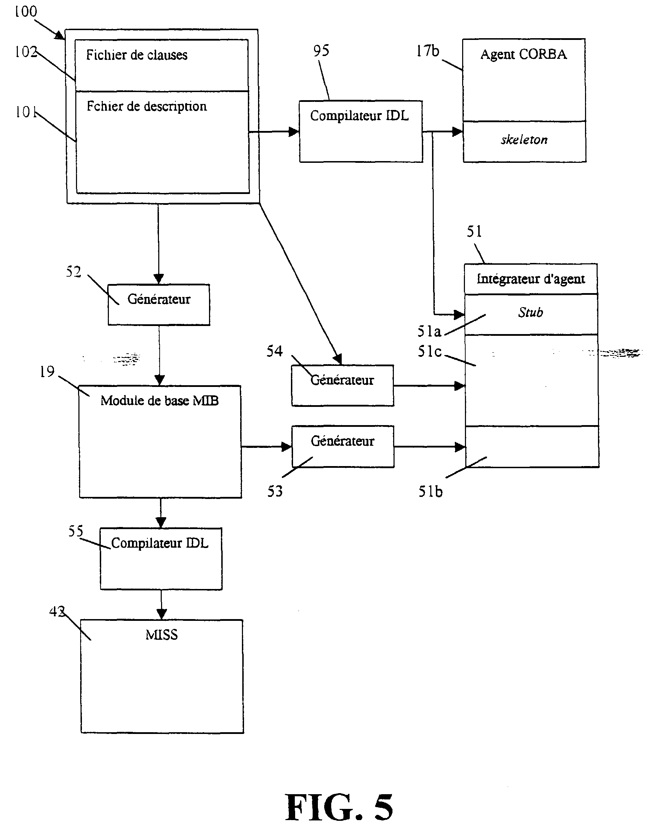

La figure 5 illustre schématiquement le procédé. Le bloc 100 comprend le fichier constitué du ficher de description IDL 101 illustré dans l'annexe ma et la zone de commentaires 102 illustré dans l'annexe 1B. Le fichier 100 est appliqué à l'entrée du premier générateur 52 pour générer le module 19 de base MIB. Le module 19 est donc un fichier de description en langage GDMO. Le module 19 est ensuite intégré dans la base MIB. En pratique, dans l'exemple illustré, l'intégration du module 19 dans la base MIB est faite par compilation du module 19. La compilation est faite ici par le compilateur GDMO 55 illustré dans la figure 2. Le module 19 est directement assimilable par le compilateur 55. Le compilateur 55 a pour nom *gdmoc* dans le produit OpenMaster de l'exemple considéré. Il prend la description GDMO du module 19 en entrée, en vérifie la syntaxe et entre cette description dans la base MISS 42 de la figure 2 pour rendre disponible la description aux services 40 et aux applications 31 de la plate-forme 20.

La figure 5 illustre aussi un procédé en résultant pour la génération automatique de l'intégrateur 51. Cet intégrateur tel qu'illustré sert à la conversion du langage IDL en protocole CMIP. Un agent intégrateur CORBA 17b de la figure 2 est formé selon la technique antérieure, qui consiste à appliquer le fichier de description IDL 101 de l'annexe 1B à l'entrée du compilateur IDL 95. Une première partie 51a de l'intégrateur 51 est faite aussi à partir du compilateur 95. En fait, le compilateur 95 fournit une partie dite "skeleton" à l'agent CORBA et une partie dite "stub" à l'intégrateur 51 pour en constituer la première partie 51a. Une seconde partie 51b de l'intégrateur 51 est aussi faite selon la technique antérieure, qui consiste à appliquer le module 19 de description GDMO au second générateur 53, adapté à la générattion automatique d'intégrateur d'agent à partir d'une description GDMO, cet outil étant appelé OPAL/ADK dans le produit OpenMaster®. À noter toutefois que dans la technique antérieure, le module GDMO était celui complété manuellement alors que dans l'invention, il est généré en entier automatiquement. Selon l'invention, une troisième partie 55c de l'intégrateur 51 est faite simplement et automatiquement à partir du fichier 100 au moyen du troisième générateur 54. Le générateur 54 convertit le langage IDL du fichier 100 en un langage, par exemple C et/ou C++ qui sert à faire un lien entre la partie 56a générée à partir du langage IDL et la partie 56b générée à partir du langage GDMO.

Les commentaires illustrés en annexe 1A sont donnés à titre indicatif et vont maintenant être commentés. On a vu que la marque GEN est ajoutée au début d'un commentaire pour être interprétée par les générateurs 52 et 54 comme début de commentaire. Les commentaires se composent de clauses ayant chacune leur signification pour le générateur 52. Une clause se compose d'au moins un mot dé s'appliquant à au moins un attribut qui le suit. Les clauses illustrées en annexe sont classées en plusieurs types qui ont été numétotés par les lettres A-E en italique et entre parenthèses dans le seul but de faciliter leur présentation. Cette présentation est faite aussi en référence à l'annexe 2 à la présente description et en en faisant partie. L'annexe 2 donne simplement une liste explicative des types des clauses utilisées, ici A-H.

Dans l'annexe 1A, la clause de type A se compose du mot clé METHOD_TO_ATTRIBUTE suivi d'une méthode, ici *get_label*, et d'un attribut, ici *label*. Selon l'annexe 2, cette clause indique aux générateurs 52 et 54 de convertir la méthode *get_label* en l'attribut *label*. On notera que le convertisseur 52 de services CMIS ne générera aucun service M-ACTION mais que les générateur 52 généreront l'attribut spécifié. En d'autres termes, un clause du type (A) comprend un mot dé (METHOD_TO_ATTRIBUTE), une première caractéristique représentative du nom d'une méthode et une seconde caractéristique représentative d'un attribut, le mot clé indiquant au générateur de convertir ladite méthode en ledit attribut.

Dans l'annexe 1A, la clause de type B a le mot dé MULTIPLE_DECLARE, qui signifie aux générateurs 52 et 54 qu'ils vont trouver une première interface incluant l'attribut qui le suit, ici "hostname" et une seconde interface incluant aussi cet attribut, Il est à noter qu'en langage GDMO il est possible d'utiliser la même définition d'attribut dans des classes différentes d'objets gérés (classes MOC). Ainsi, quand les générateurs trouvent la première interface, ils génèrent une première classe MOC à partir de cette première interface et, de même, quand les générateurs trouvent la seconde interface, ils génèrent une seconde classe MOC à partir de cette seconde interface. Ils utilisent donc le même attribut, ici "hostname" dans le langage GDMO. En bref, clause du second type B comprend un mot clé (MULTIPLE_DECLARE) et un attribut, le mot clé indiquant au générateur de générer des classes d'objets à partir dudit attribut.

Dans les commentaires de l'annexe 1A, la clause de type C a le mot clé IGNORE, qui signifie aux générateur de ne pas traduire le terme IDL qui le suit. Le terme peut être notamment un nom d'interface, un nom d'exception, un nom d'attribut et un nom de méthode. Dans l'exemple illustré, le terme est un attribut nommé "ActualAttributeValue_t". En d'autres termes, les générateurs ne modifient pas le langage IDL pour la conversion. Ce mot clé offre l'avantage de ne pas générer des choses inutiles dans la description GDMO, cela sans toucher au fichier de description IDL.

La clause de type D a le mot clé TYPEDEF, qui indique aux générateurs 52 et 54 qu'il faut remplacer le premier mot qui le suit, représentatif d'un type du langage GDMO, ici "*InterfaceDef*", par le second mot représentatif d'un type du langage IDL, ici "*Object*", normalement défini par une partie code dans le fichier de description de l'annexe 1B, cette partie de code commençant ici par un terme nomme "include" et référencé par le caractère "#". Cette clause permet de faire des synonymes entre les deux langages correspondants. En fait, cette clause est un moyen de définir un type de données utilisé en langage IDL à partir du type de base. Cette définition est normalement faite par le verbe "typedef" du langage IDL et est importée dans le fichier de description à l'aide des termes "include". Cette clause s'explique par l'incapacité des générateurs dé l'exemple illustré, pour des raisons de limitations imposées par la réalisation de ces générateurs, de chercher les termes "include" dans le fichier de description IDL. Comme la version courante des générateurs utilisés dans l'exemple choisi ne gère pas les clauses de précompilation qui commencent par le caractère "#" dans le fichier de description IDL de l'annexe 1B, il a été ajouté au fichier de l'annexe 1A du code qui est présent avec les termes "include" et nécessaire à la conversion au début du fichier de description de l'annexe 1B. En outre, dans le fichier de description de l'annexe 1B, il est ajouté une première marque suivi d'un terme non défini, ici *"#ifdef FOR_GENERATOR*_*TIME*" et une seconde marque "#endif" (non illustrée). Ainsi, le compilateur 55 de la figure 2 ignore ce qui est entre ces deux marques puisque le terme "*FOR_GENERATOR_TIME* " n'est pas défini. Dans le compilateur, le préprocesseur (non illustré), qui génère du code C++ à partir du fichier de description, éjecte la partie entre les deux marques alors que les deux générateurs 54 et 55 vont les prendre en compte. En d'autres termes, on peut dire que si les générateurs 52 et 54 ne gèrent pas des clauses de précompilation, une clause de troisième type (D) inclut un mot clé (TYPEDEF) et deux mots, le mot dé indiquant aux générateurs 52 et 54 qu'il faut remplacer l'un (*InterfaceDef*) des deux mots, représentatif d'un type dudit module, par l'autre mot (*Object*) représentatif d'un type du langage donné IDL normalement défini par une partie de code (sous #include) dans le fichier de description.

Les clauses de type E dans les commentaires de l'annexe 1A sont relatives aux liens de nommage, appelés *name-binding*. Ces clauses sont dues au fait qu'il n'y a pas de liens de nommage entre classes en langage IDL mais qu'il en existe en GDMO. Cette clause permet ainsi d'introduire des liens de nommage *name-binding* dans une définition. Les clauses de type E comprennent trois mots clés SUPER, SUBORD et NAME, suivis respectivement de mots (caractéristiques d'objets, attributs, etc.). Le mots clés SUPER et SUBORD désignent respectivement les classes supérieures et subordonnées d'objets et le mot clé NAME désigne l'attribut de nommage de la classe subordonnée. Par exemple, la clause "SUPER orb SUBORD AgentSystem NAME hostname" indique qu'une instance de la classe "Agentsystem" peut se trouver sous, ou être contenue dans, une instance de la classe "orb" et qu'elle est nommée, en tant qu'attribut utilisé pour le nom RDN, avec l'attribut "hostname" qui appartient à la classe "AgentSystem". En d'autres termes, une clause de quatrième type (E) comprend trois mots clés (SUPER, SUBORD, NAME correspondant respectivement à trois caractéristiques (orb, AgentSystem, hostname), deux des mots dés désignant par leurs caractéristiques correspondantes deux instances de classes respectivement supérieure et inférieure et le troisième mot dé désignant par la troisième caractéristique l'attribut de nommage de la dasse subordonnée.

Les clauses de types F et G de l'annexe 2 sont des clauses introductives. Ainsi, la clause de type G sert à nommer le module GDMO généré par le générateur 54 et la clause de type H sert à nommer le module ASN1 généré par le générateur 55.

La clause de type H de l'annexe 2 nécessite les observations préliminaires suivantes. Tous les objets sémantiques GDMO générés (MOC, *NameBinding, Package, Attribute*) sont identifiés par des identifieurs d'objets (Object IDentifiers) tels que définis par la norme ASN1. Ces identifieurs sont des suites d'entiers reprenant un même préfixe. Par exemple, si on alloue la suite "1 3 12" comme préfixe, on allouera automatiquement dans la génération automatique les identifieurs "1 3 12 1 1", "1 3 12 1 2", "1 3 12 1 3", "1 3 12 1 4", ... pour identifier les clasess MOC, puis les identifieurs "1 3 12 2 1", "1 3 12 2 2", "1 3 12 2 3", "1 3 12 2 4", ... pour identifier les liens de nommage *name-binding*, etc La clause de type J permet de demander aux générateurs 54 et 55 de prendre un préfixe différent de ceux définis précédemment. Selon notre exemple, la clause "OID_TAG 15" demande au générateur de changer le préfixe précédent, ici "1 3 12" en "1 3 15".En fait, .les identifieurs sont générés à l'aide du préfixe, qui est alloué dans le système d'administration 10 pour le système COBA et auquel est ajouté un entier supplémentaire, le nombre 15 dans l'exemple illustré. Cet entier supplémentaire sert à distinguer des générations en langage IDL entre elles et, donc, à distinguer entre eux des modules de base MIB différents. Ainsi, s'il existe plusieurs types d'agents implémentant des modules différents de base MIB, il est possible de voir tous ces agents dans la base MIB du système d'administration 10. En d'autres termes, si les objets sont identifiés par des identifieurs (OID) ayant un même préfixe, une clause de cinquième type (H) comprend un mot clé (OID_TAG) et un entier (15), le mot dé indiquant au générateur de prendre un préfixe différent et défini par ledit entier.

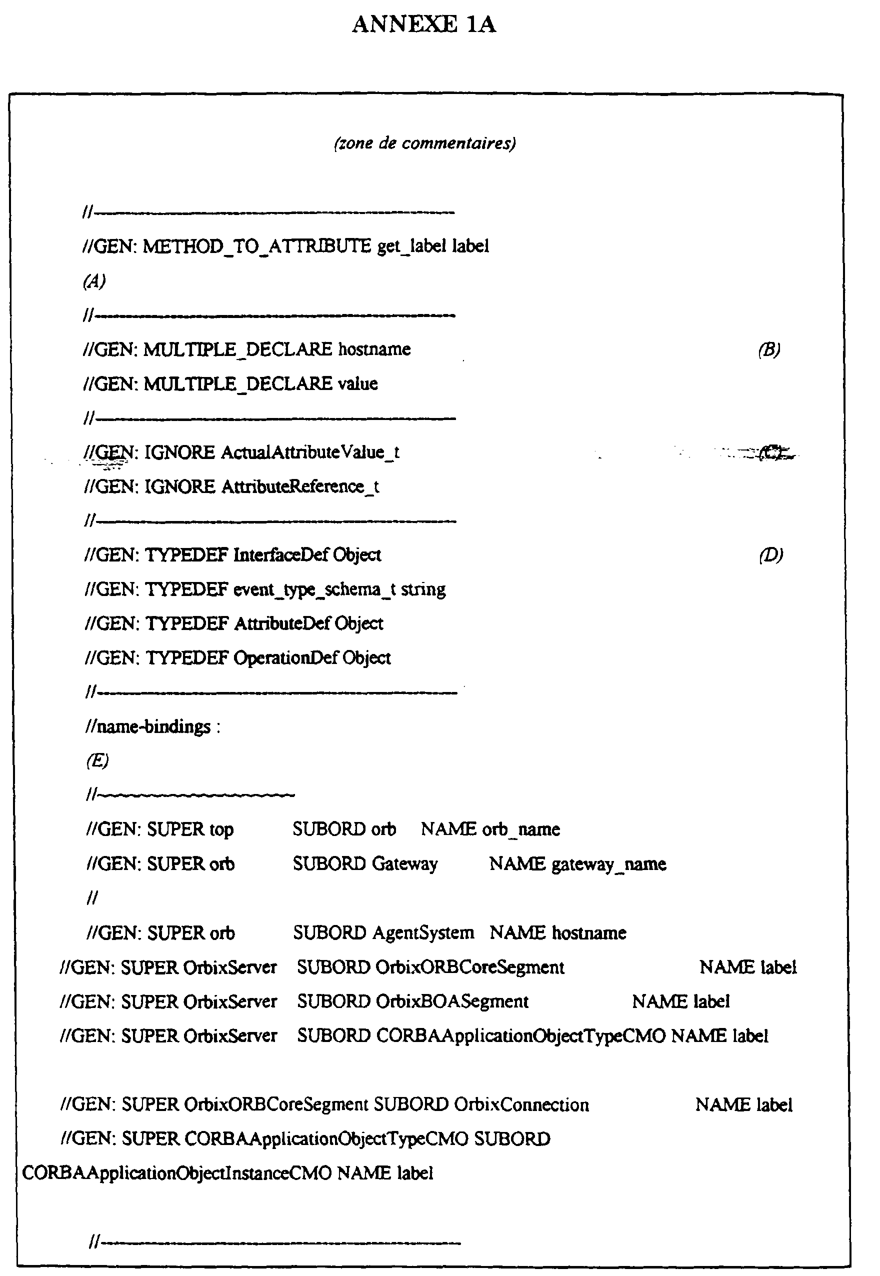

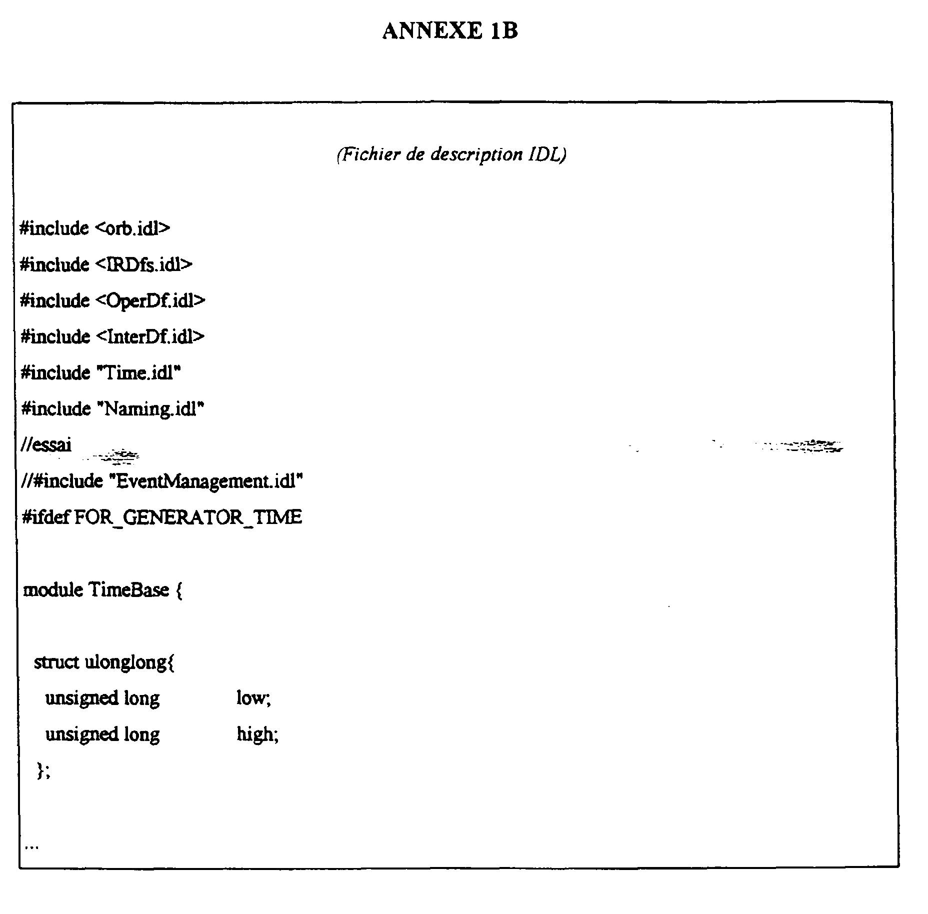

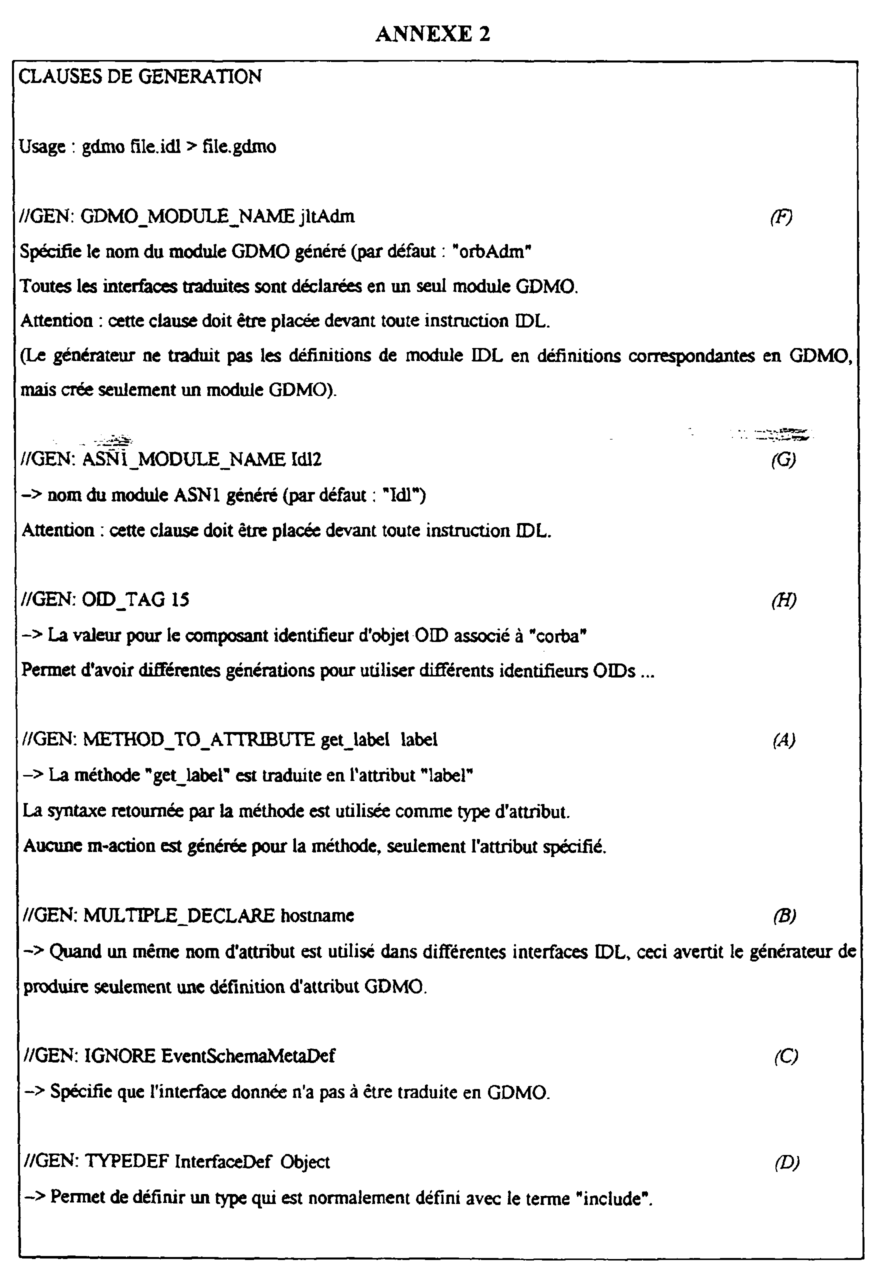

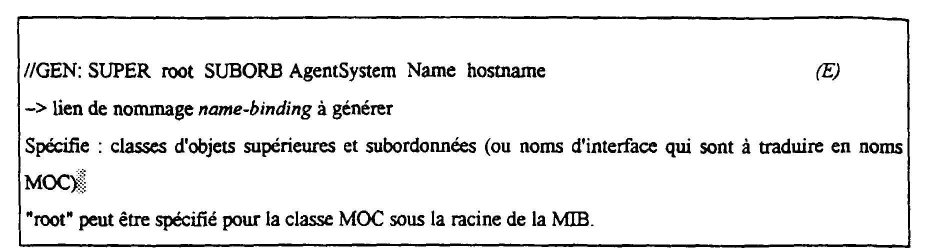

## Revendications

1. Procédé de génération automatique d'un module (19) d'une base d'informations d'administration (MIB) d'une ressource informatique (11) représentée par objets et incluant une architecture d'objets distribués (CORBA) selon un langage donné (IDL), consistant à faire un fichier (annexe 1B) de description d'interface dans le langage donné et à appliquer ledit fichier à des moyens de génération automatique (52) pour obtenir une partie dudit module, caractérisé en ce qu'il consiste à ajouter audit fichier de description un fichier (annexe 1A) de clauses de génération automatique, une clause comprenant au moins un mot clé déterminant un mode de génération et au moins une caractéristique sur laquelle porte un mot clé, et à appliquer le fichier de clauses auxdits moyens de génération pour compléter ledit module.

2. Procédé selon la revendication 1, caractérisé en ce que le fichier de clauses et le fichier de description ne forment qu'un seul fichier (100), l'un (annexe 1A) des deux fichiers étant distingué de l'autre par une marque (GEN).

3. Procédé selon la revendication 1 ou 2, caractérisé en ce qu'une clause d'un premier type (A) comprend un mot clé (METHOD_TO_ATTRIBUTE), une première caractéristique représentative du nom d'une méthode et une seconde caractéristique représentative d'un attribut, le mot clé indiquant aux moyens de génération de convertir ladite méthode en ledit attribut.

4. Procédé selon l'une des revendications 1 à 3, caractérisé en ce qu'une clause d'un second type (B) comprend un mot clé (MULTIPLE_DECLARE) et un attribut, le mot clé indiquant au générateur de générer des classes d'objets à partir dudit attribut.

5. Procédé selon l'une des revendications 1 à 5, caractérisé en ce qu'une clause de troisième type (C) comprend un mot clé (IGNORE) et une caractéristique, le mot clé indiquant aux moyens de génération d'ignorer ladite caractéristique.

6. Procédé selon l'une des revendications 1 à 5, caractérisé en ce les moyens de génération ne gérant pas des clauses de précompilation, une clause de troisième type (D) inclut un mot dé (TYPEDEF) et deux mots, le mot dé indiquant aux moyens de génération qu'il faut remplacer l'un des mots (*InterfaceDef*) par l'autre mot (*Object*) représentatif d'un type du langage donné normalement défini par une partie de code (sous #include) dans le fichier de description.

7. Procédé selon l'une des revendications 1 à 6, caractérisé en ce qu'une clause de quatrième type (E) comprend trois mots clés (SUPER, SUBORD, NAME correspondant respectivement à trois caractéristiques (orb, AgentSystem, hostname), deux des mots clés désignant par leurs caractéristiques correspondantes deux instances de classes respectivement supérieure et inférieure et le troisième mot clé désignant par la troisième caractéristique l'attribut de nommage de la classe subordonnée.

8. Procédé selon l'une des revendications 1 à 7, caractérisé en ce que les objets étant identifiés par des identifieurs (OID) ayant un même préfixe, une clause de cinquième type (H) comprend un mot clé (OID_TAG) et un entier (15), le mot clé indiquant au générateur de prendre un préfixe différent et défini par ledit entier.

9. Procédé selon l'une des revendications 1 à 8, caractérisé en ce que les moyens de génération comprennent en outre un générateur (54) pour la génération automatique d'une partie (51c) d'un intégrateur d'agents d'administration (51).

10. Système d'administration (10) d'une ressource informatique (11) représentée par objets définis dans une base d'informations d'administration (MIB) incluant un module, la ressource informatique incluant une architecture d'objets distribués (CORBA) selon un langage donné (IDL), caractérisé en ce qu'il met en oeuvre le procédé défini par l'une des revendications précédentes.
